# EUROPEAN PATENT SPECIFICATION

(11) **EP 2 974 394 B1**
(45) Date of publication and mention of the grant of the patent: **02.01.2019**
(21) Application number: 13882087.3
(22) Date of filing: 21.10.2013
(51) Int. Cl.: H04W 4/02, H04L 29/06, H04W 4/00, G06F 21/62

(54) **LOCATION-BASED FUNCTIONALITY RESTRICTIONS**
STANDORTBASIERTE FUNKTIONALITÄTSBESCHRÄNKUNGEN
RESTRICTIONS DE FONCTIONNALITÉ BASÉES SUR LA LOCALISATION

(30) Priority: 15.04.2013 US 201313863154
(43) Date of publication of application: 20.01.2016
(73) Proprietor: Airwatch LLC, Atlanta, GA 30338 (US)
(72) Inventor: MARSHALL, John, Atlanta, GA 30309 (US); STUNTEBECK, Erich, Marietta, GA 30066 (US)
(74) Representative: Appleyard Lees IP LLP
(86) International application number: PCT/US2013/065947
(87) International publication number: WO 2014/171970

(56) References cited:
- US-A1- 2005 181 808
- US-A1- 2005 272 445
- US-A1- 2006 059 100
- US-A1- 2006 234 793
- US-A1- 2007 053 306
- US-A1- 2008 125 102
- US-A1- 2010 107 238
- US-A1- 2010 191 837
- US-A1- 2012 290 544
- US-A1- 2012 331 527
- US-B1- 7 769 394

## Description

### RELATED CASES

This application claims priority to US13/863,154, filed on April 15, 2013.

### BACKGROUND

Today, many governments are levying legislative penalties on businesses that provide their employees with access to business resources and/or device functionality outside of the business's facilities and/or locations. Also, many businesses experience loss of revenue as a result of their employees' access to personal resources and/or device functionality inside of the business's facilities and/or locations. Automated compliance rules may be provided for handling situations where certain functionality on a device is restricted within certain location, such as within and/or outside a business's facilities. Conventional solutions often restrict the use of a device entirely to prevent the device from performing such functionality that is restricted within such locations. US 2005/0181808 A1 describes a cell phone system that controls the functionality of cell phones based upon their geographical locations.

US2012/0331527 describes methods and apparatus for management of network resource access based on a current location of a mobile device. US2007/0053306 describes systems, methods and software for identifying location based rules related to a network connected device. US7769394 describes a system and method for location-based device control. US2010/0107238 describes a security module and method within an information handling system.

### SUMMARY

According to the present invention there is provided an apparatus and method as set forth in the appended claims. Other features of the invention will be apparent from the dependent claims, and the description which follows. This Summary is provided to introduce a selection of concepts in a simplified form that are further described below in the Detailed Description. This Summary is not intended to identify key features or essential features of the claimed subject matter. Furthermore, this Summary is not intended to limit the claimed subject matter's scope.

In one example, location-based functionality restrictions may be provided. Periodic scans may be performed to identify requested functionality and determine whether the functionality is restricted according to a location constraint. Upon identifying a request to perform functionality that is restricted according to a location constraint, the request to perform the functionality may be denied. The location constraints may be defined according to, amongst other possible locations, locations associated with a business.

In one example, there is provided a method comprising: identifying at least one request to perform at least one function on at least one user device; determining whether the at least one function does not comply with at least one compliance rule associated with the at least one user device, wherein the at least one compliance rule may comprise at least location where the at least one user device is authorized to perform the at least one function; and performing at least one remedial action in response to at least one determination that the at least one function does not comply with at least one of the at least one compliance rule.

The at least one location may comprise a business location. The at least one location may comprise a non-business location. The determination that the at least one function does not comply with at least one of the at least one compliance rule may comprise a determination that the at least one function does not comply with a threshold number of the at least one compliance rule. The determination that the at least one function does not comply with at least one of the at least one compliance rule may comprise a determination that the at least one function does not comply with each of the at least one compliance rule. The at least one remedial action may comprise at least one remedial action taken with respect to the at least one user device. The at least one remedial action may comprise or further comprise disabling at least one hardware feature of the at least one user device. The at least one remedial action may comprise or further comprise disabling at least one software feature of the at least one user device. The at least one remedial action may comprise or further comprise disabling at least one application of the at least one user device. The at least one remedial action may comprise or further comprise queuing the at least one request to perform the at least one function on the at least one user device until the at least one function complies with the at least one compliance rule. The at least one remedial action may comprise or further comprise restoring the at least one user device to its factory state. The at least one remedial action may comprise or further comprise erasing at least one location of at least one memory of the at least one user device. The at least one location of the at least one memory may comprise data associated with the at least one request. The at least one location of the at least one memory may comprise or further comprise data associated with the at least one function. The at least one location of the at least one memory may comprise or further comprise business data. The at least one location of the at least one memory may comprise or further comprise personal data. The at least one remedial action may comprise or further comprise at least one remedial action taken with respect to at least one remote service communicatively coupled to the at least one user device. The at least one remedial action may comprise or further comprise blocking at least one data transmission from the at least one user device to at least one remote service communicatively coupled to the at least one user device. The at least one remedial action may comprise or further comprise blocking at least one data transmission from at least one remote service communicatively coupled to the at least one user device to the at least one user device. The at least one remedial action may comprise or further comprise erasing at least one location of at least one memory of at least one remote service communicatively coupled to the at least one user device.

In one example, there is provided an apparatus comprising: at least one memory storage; and at least one processor coupled to the at least one memory storage, wherein the at least one processor is configured to: identify at least one function being performed by at least one user device; determine whether the at least one function does not comply with at least one of at least one compliance rule associated with the at least one user device, wherein the at least one compliance rule may comprise at least one location where the at least one user device is authorized to perform the at least one function; and performing at least one remedial action in response to at least one determination that the at least one function does not comply with at least one of the at least one compliance rule.

The at least one user device may be communicatively coupled to the apparatus. The at least one location may comprise a business location. The at least one location may comprise a non-business location. The at least one processor may be configured to identify the at least one function being performed by the at least one user device on a periodic basis. The periodic basis may comprise a configurable setting defined by at least one administrator of the apparatus. The at least one processor may be configured to identify the at least one function being performed by the at least one user device at the request of at least one administrator of the apparatus. The determination that the at least one function does not comply with at least one of the at least one compliance rule may comprise a determination that the at least one function does not comply with a threshold number of the at least one compliance rule. The determination that the at least one function does not comply with at least one of the at least one compliance rule may comprise a determination that the at least one function does not comply with each of the at least one compliance rule. The at least one remedial action may comprise disabling at least one hardware feature of the at least one user device. The at least one remedial action may comprise or further comprise disabling at least one software feature of the at least one user device. The at least one remedial action may comprise or further comprise disabling at least one application of the at least one user device. The at least one remedial action may comprise or further comprise erasing at least one location of at least one memory the at least one user device, wherein the location may comprise business data. The at least one remedial action may comprise or further comprise erasing at least one location of at least one memory the at least one user device, wherein the location may comprise personal data. The at least one remedial action may comprise or further comprise restoring the at least one user device to its factory state. The at least one remedial action may comprise or further comprise queuing the at least one function until the at least one function complies with the at least one compliance rule associated with the at least one user device. The at least one remedial action may comprise or further comprise blocking at least one data transmission from the at least one user device to at least one remote service communicatively coupled to the at least one user device. The at least one remedial action may comprise or further comprise blocking at least one data transmission from at least one remote service communicatively coupled to the at least one of user device to the at least one user device. The at least one remedial action may comprise or further comprise erasing at least one location of at least one memory of at least one remote service communicatively coupled to the at least one user device.

In one example, there is provided a non-transitory computer-readable medium that stores a set of instructions that when executed performs a method executed by the set of instructions comprising: identifying at least one function being performed by at least one user device; determining whether the function does not comply with at least one of at least one compliance rule associated with the at least one user device; responsive to a determination that the function does not comply with at least one of the at least one compliance rule, determining whether the function has previously not complied with at least one of the at least one compliance rule; and responsive to a determination that the function has previously not complied with at least one of the at least one compliance rule, performing an escalated remedial action.

The at least one compliance rule may comprise at least one location where the at least one user device is authorized to perform the at least one function. The at least one location may comprise a business location. The at least one location may comprise a non-business location. The escalated remedial action may comprise erasing at least one location of at least one memory of the at least one user device. The at least one location of at least one memory of the at least one user device may comprise business data. The at least one location of at least one memory of the at least one user device may comprise or further comprise personal data. The escalated remedial action may comprise or further comprise restoring the at least one user device to its factory state.

It is to be understood that both the foregoing general description and the following Detailed Description are examples and explanatory only, and should not be considered to restrict the disclosure's scope, as described and claimed. Further, features and/or variations may be provided in addition to those set forth herein. For example, embodiments of the disclosure may be directed to various feature combinations and sub-combinations described in the Detailed Description.

### BRIEF DESCRIPTION OF THE DRAWINGS

Many aspects of the present disclosure can be better understood with reference to the following diagrams. The drawings are not necessarily to scale. Instead, emphasis is placed upon clearly illustrating certain features of the disclosure. Moreover, in the drawings, like reference numerals designate corresponding parts throughout the several views. In the drawings:
Figure 1 is a block diagram of a user device;
Figure 2 is a block diagram of an operating environment; and
Figure 3 is a flow chart illustrating a method for providing location-based functionality restrictions.

### DETAILED DESCRIPTION

The following Detailed Description refers to the accompanying Figures. Wherever possible, the same reference numbers are used in the Figures and the following description to refer to the same or similar elements. While embodiments of the disclosure may be described, modifications, adaptations, and other implementations are possible. For example, substitutions, additions, or modifications may be made to the elements illustrated in the Figures, and the methods described herein may be modified by substituting, reordering, or adding stages to the disclosed methods. Accordingly, the following Detailed Description does not limit the disclosure. Instead, the proper scope of the disclosure is defined by the appended claims.

Location-based functionality restrictions may be provided by certain methods, apparatuses, and non-transitory computer readable medium as described herein. Methods for providing location-based functionality restrictions may include methods performed by software applications. Examples of such methods may include those performed by device management server applications executed on servers and device management agent applications executed on user devices. User devices may include smartphones, tablets, laptops, desktops and other computing devices. Moreover, apparatuses for providing location-based functionality restrictions may include devices executing software applications that perform methods for providing location-based functionality restrictions. Examples of such apparatuses may include servers executing device management server applications and user devices executing device management agent applications. Additionally, non-transitory computer readable mediums for providing location-based functionality restrictions may include software applications that when executed cause a computing device to perform the steps of the methods for providing location-based functionality restrictions. Examples of such non-transitory computer readable mediums may include device management server applications executable by servers and device management agent applications executable by user devices.

Providing location-based functionality restrictions may begin by identifying requests to perform functions on user devices and/or identifying functions being performed on user devices. Compliance rules associated with the user devices may be identified and, based on such compliance rules, a determination may be made as to whether the functions requests and/or being performed are authorized to be performed by the user devices at the current location. If it is determined that the user devices are not authorized to perform the functions at the current location, a remedial action may be performed such as blocking the function being requested and/or being performed. If it is determined a second time that the users are not authorized to perform the functions at the current location, an escalated remedial action may be taken such as erasing business and/or personal data from the user device. Furthermore, if it is determined that the user devices are authorized to perform the functions at the current location, the user devices may be permitted to proceed with the request to perform functions and/or the functions being performed without interruption.

Location-based functionality restrictions may be implemented to enable and/or disable certain functionality on a user device within and/or outside of business locations. For example, location-based functionality restrictions may ensure that employees only receive their business email on their smartphone while at a location associated with the business, such as an office location, and only receive their personal email on their smartphone while outside of locations associated associated with the business.

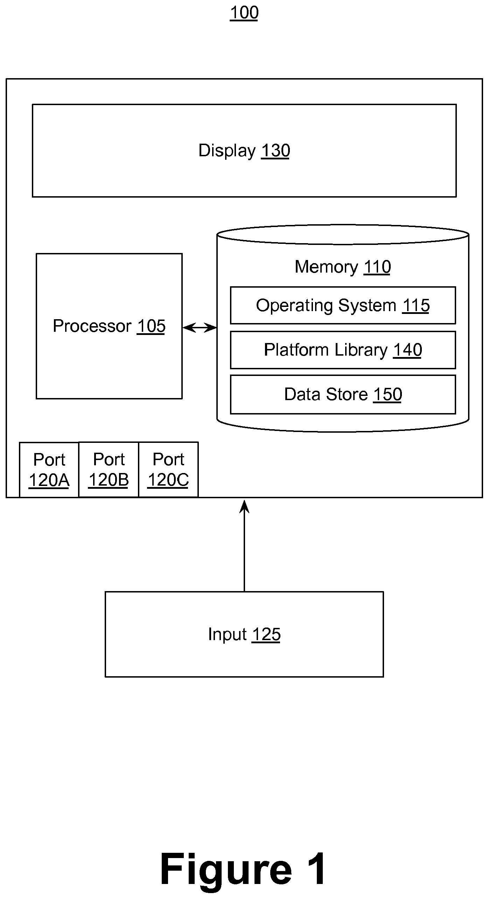

Figure 1 is a block diagram of a User Device 100 comprising a Processor 105 and a Memory 110. Depending on the configuration and type of User Device, Memory 110 may comprise, but is not limited to, volatile (e.g. random access memory (RAM)), non-volatile (e.g. read-only memory (ROM)), flash memory, or any combination thereof. Memory 110 may store executable programs and related data components of various applications and modules for execution by User Device 100. Memory 110 may be coupled to Processor 105 for storing configuration data and operational parameters, such as commands that are recognized by Processor 105. User Device 100 may comprise, for example, a desktop computer, a laptop computer, a personal digital assistant, a cellular telephone, a set-top box, a music player, a web pad, a tablet computer system, a game console, and/or another device with like capability.

Basic functionality of User Device 100 may be provided by an Operating System 115 contained in Memory 100. Various programmed software applications may be executed by utilizing the computing resources in User Device 100. Applications stored in Memory 110 may be executed by Processor 105 (e.g., a central processing unit or digital signal processor) under the auspices of Operating System 115. For example, Processor 105 may be configured to execute applications such as web browsing applications, email applications, instant messaging applications, and/or other applications capable of receiving and/or providing data.

Data provided as input to and generated as output from the application(s) may be stored in Memory 110 and read by Processor 105 from Memory 110 as needed during the course of application program execution. Input data may be data stored in Memory 110 by a secondary application or other source, either internal or external to User Device 100, or possibly anticipated by the application and thus created with the application program at the time it was generated as a software application program. Data may be received via any of a plurality of (Communication) Ports 120A, 120B, and/or 120C of User Device 100. Communication Ports 120A, 120B, and/or 120C may allow User Device 100 to communicate with other devices, and may comprise components such as an Ethernet network adapter, a modem, and/or a wireless network connectivity interface. For example, the wireless network connectivity interface may comprise one and/or more of a PCI (Peripheral Component Interconnect) card, USB (Universal Serial Bus) interface, PCMCIA (Personal Computer Memory Card International Association) card, SDIO (Secure Digital Input-Output) card, NewCard, Cardbus, a modem, a wireless radio transceiver, and/or the like.

User Device 100 may also receive data as user input via an Input (Component) 125, such as a keyboard, a mouse, a pen, a stylus, a sound input device, a touch input device, a capture device, etc. A capture device may be operative to record user(s) and capture spoken words, motions and/or gestures, such as with a camera, microphone, and/or accelerometer. The capture device may comprise any speech and/or motion detection device capable of detecting the speech and/or actions of the user(s).

Data generated by applications may be stored in Memory 110 by the Processor 105 during the course of application program execution. Data may be provided to the user of User Device 100 during application program execution by means of a Display 130. Consistent with embodiments of this disclosure, Display 130 may comprise an integrated display screen and/or an output port coupled to an external display screen.

Memory 110 may also comprise a Platform Library 140. Platform Library 140 may comprise a collection of functionality useful to multiple applications, such as may be provided by an application programming interface (API) to a software development kit (SDK). These utilities may be accessed by applications as necessary so that each application does not have to contain these utilities thus allowing for memory consumption savings and a consistent user interface.

Furthermore, embodiments of this disclosure may be practiced in conjunction with a graphics library, other operating systems, or any other application program and is not limited to any particular application or system. The devices described with respect to the Figures may have additional features or functionality. For example, User Device 100 may also include additional data storage devices (removable and/or non-removable) such as, for example, magnetic disks, optical disks, or tape (not shown).

User Device 100 may store device and/or user-specific information in a Data Store 150, such as a device profile, a plurality of credentials and/or a plurality of user preferences. A device profile may comprise an indication of the current position of User Device 100 and/or indications of the hardware, software, and security attributes that describe User Device 100. For instance, the device profile may represent hardware specifications of User Device 100, version and configuration information of various software program and hardware components installed on User Device 100, data transmission protocols enabled on User Device 100, version and usage information of various resources stored on User Device 100, and/or any other attributes associated with the state of User Device 100. The device profile may further comprise data indicating a date of last virus scan of User Device 100, a date of last access by an IT representative, a date of last service by the IT representative, and/or any other data indicating maintenance and usage of User Device 100. Furthermore, the device profile may comprise indications of the past behavior of associated users, such as resources accessed, charges for resources accessed, and the inventory accessed from such resources.

The credentials may comprise a plurality of user credentials and/or a plurality of device credentials. The user credentials may comprise a plurality of PIN numbers, simple passwords, complex passwords, usernames, account identifiers, biometric indicators, and/or other data capable of authenticating the user of the User Device 100. The device credentials may comprise a plurality of hardware identifiers, serial numbers, IMEI numbers, phone numbers, and/or other data capable of authenticating the User Device 100. The user preferences may comprise a listing of factors that may affect the experience of the user of User Device 100. In particular, the user preferences may include indications of the user's age, gender, bodily traits, preferred resource types, preferred venue resources, and combinations thereof.

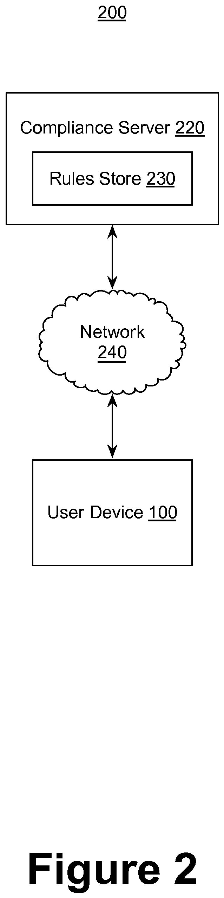

Figure 2 is a block diagram view of an operating environment 200 comprising User Device 100 in communication with a Compliance Server 220 via a Network 240. The Compliance Server 220 may comprise, for example, cloud-based solutions, server computers and/or any other system providing device management capability. For purposes of convenience, the Compliance Server 220 is referred to herein in the singular, although it is understood that a plurality of servers may be employed in the arrangements as descried herein. Furthermore, in some embodiments, multiple Compliance Servers 220 may operate on the same server computer. The components executed on the Compliance Server 220, for example, may comprise various applications, services, processes, systems, engines, or functionality not disclosed in detail herein.

The Compliance Server 220 may comprise a Rules Store 230 comprising a plurality of compliance rules that may be applicable to User Device 100. While the Rules Store 230 is shown as within the Compliance Server 220, the Rules Store 230 may alternately be within the User Device 100 and may be remotely updated periodically by Compliance Server 220 according to common over-the-air (OTA) updating methods. Attempts by User Device 100 to perform certain functionality on User Device 100 may require User Device 100 to be in compliance with one and/or more of the compliance rules. Depending on the sensitivity of a given functionality, different compliance rules may be necessary to ensure that the functionality is adequately restricted. Some functionality may only require ensuring that the proper user is requesting the functionality. Other resources may require compliance with more stringent authorization rules, such as determining whether the functionality is restricted while User Device 100 is located at certain locations, and/or during certain time periods. Compliance rules may further specify that User Device 100 is only authorized to perform certain functionality if User Device 100 is not comprised, e.g. that Operating System 115 of User Device 100 has not been jailbroken, rooted, and/or otherwise modified. Accordingly, User Device 100 and/or Compliance Server 220 may be operative to determine whether the user of User Device 100 is authorized to perform requested functionality at the location where the user of User Device 100 requests to perform such functionality.

In some embodiments, an agent application executed on User Device 100 may make the compliance determination based on the device profile, credentials, and/or user preferences. For instance, an agent application may monitor the calls by applications on User Device 110 to the Operating System 115 of User Device 100 to determine whether User Device 110 seeks to perform functionality that may violate a given compliance rule. Additionally, an agent application on User Device 100 may approve and/or deny the associated functionality requests. For instance, the agent application may instruct Operating System 115 on User Device 100 to disable the camera of User Device 120 in response to a determination that a compliance rule specifies that the camera cannot be used at the current location where the request by the User Device 100 was made to operate the camera.

In some embodiments, an agent application executed on User Device 100 may rely on Compliance Server 220 to determine whether a given functionality request on User Device 100 is permitted according to the compliance rules. For instance, the agent application may transmit a functionality request, a device profile, credentials, and/or user preferences to Compliance Server 220 so that Compliance Server 220 may determine whether User Device 110 seeks to perform functionality that may violate a given compliance rule. Additionally, Compliance Server 220 may approve and/or deny the associated functionality requests. For instance, Compliance Server 220 may instruct an agent application on User Device 100 to instruct Operating System 115 on User Device 100 to disable the email transmission port of User Device 120 in response to a determination that a compliance rule specifies that email cannot be received at the location where the User Device 100 made the request to receive email. Compliance Server 220 may, for instance, instruct an agent application and/or Operating System 115 of User Device 100 via application programming interface (API) calls and/or other programming that allows control and/or instruction of User Device 100 by applications and/or services communicatively coupled to User Device 100.

In some embodiments, the compliance rules may comprise device settings and/or executable instructions that define which functionality the Operating System 115 of User Device 100 is authorized to perform at a given location. In certain embodiments, the compliance rules may specify that functionality related to personal use of User Device 100 may not be performed within a location associated with a business, and/or that functionality related to business use of User Device 100 may not be performed outside of a location associated with a business. For example, the compliance rules may specify that business applications may only be executed on User Device 100 while User Device 100 is located within the business's offices, and may specify that personal applications may only be executed while User Device 100 is located outside of the business's offices. Furthermore, the compliance rules may comprise a list of functions, such as those provided by APIs associated with Operating System 115 and/or Platform Library 140, that may be treated as protected functions. Calls to these functions, such as calls to retrieve login credentials, may result in checks by User Device 100 and/or Compliance Server 220 for compliance with the compliance rules.

The Network 240 may comprise, for example, any type of wired and/or wireless network such as a wireless local area network (WLAN), a wireless wide area network (WWAN), Ethernet, fiber-optic network, and/or any other type of wired and/or wireless network now known or later developed. Additionally, the Network 240 may be or include the Internet, intranets, extranets, microwave networks, satellite communications, cellular systems, PCS, infrared communications, global area networks, or other suitable networks, etc., or any combination of such networks.

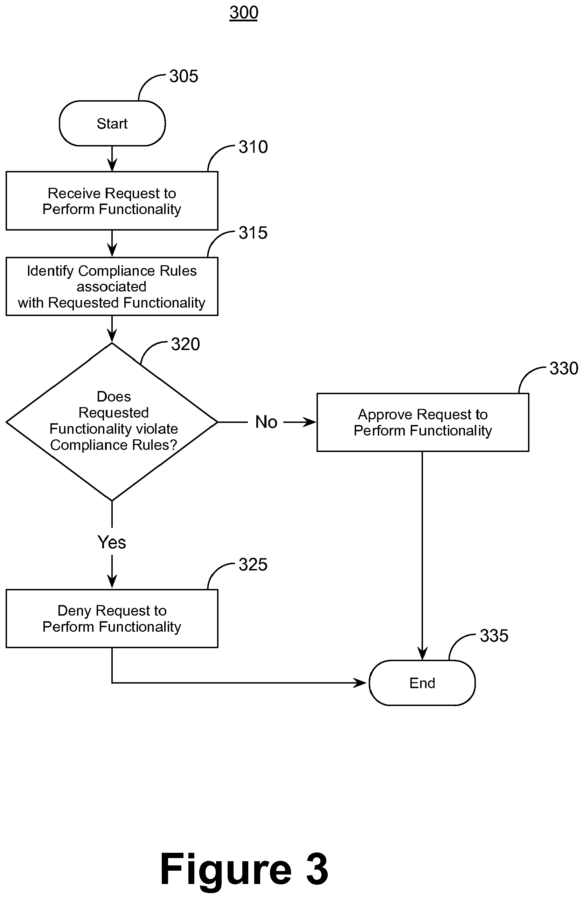

Figure 3 is a flow chart setting forth the general stages involved in a method 300 consistent with embodiments of this disclosure for providing location-based functionality restrictions. Ways to implement the stages of method 300 will be described in greater detail below. For purposes of illustration, not limitation, method 300 is described with respect to User Device 100 in communication with Compliance Server 220. Method 300 may begin at starting block 305 and proceed to stage 310 and identify requests to perform functions on a User Device 100 and/or functions being performed on a User Device 100. For example, a request to access business email on a User Device 100 may be identified in stage 310.

From stage 310, method 300 may advance to stage 315 where method 300 identifies a plurality of compliance rules associated with the User Device 100. In some embodiments, the compliance rules may specify at least one location where the User Device 100 is authorized to perform a given function. Examples of compliance rules include compliance rules that specify that business functions may only be accessed at business locations and compliance rules that specify that personal functions may only be accessed outside of business locations. From stage 315, method 300 may advance to stage 320 where method 300 determines whether the functions associated with the User Device 100 comply with the compliance rule associated with the User Device 100. For instance, a request to access a business email account on User Device 100 outside of a business location would not comply with a compliance rule specifying that User Device 100 is only authorized to access business email accounts while located within business locations. In some embodiments, User Device 100 may utilize Global Positioning System (GPS), Cellular Tower Triangulation, Near Field communication (NFC) sensors, Bluetooth, and/or other means of determining the location of a User Device 100.

If it is determined that the functions do not comply with the compliance rules, method 300 may advance to stage 330 and perform a remedial action. Remedial actions may be taken on a User Device 100 and/or remote services communicatively coupled to a User Device 100. Remedial actions may include disabling hardware features of a User Device 100, disabling software features of a User Device 100, disabling applications of a User Device 100, erasing the contents of memory locations of a User Device 100, restoring a User Device 100 to its factory state, and queuing a function until a User Device 100 is authorized to perform the function. Disabling hardware features of a User Device 100 may include disabling the Camera, Microphone and/or other features of a User Device 100 that are available on User Device 100. Disabling software features of a User Device 100 may include disabling Siri and/or other software features provided by Operating System 115 and/or other factory-installed software of User Device 100. Disabling applications of a User Device 100 may include uninstalling and/or blocking execution of applications of a User Device 100, such as email applications, browser applications, content management applications, application stores and/or the like.

Erasing the contents of memory locations may include content associated with business data, where business data may include electronic files, applications and/or other data associated with an enterprise, business, and/or other organization. Erasing the contents of memory locations may also include content associated with personal data, where personal data may include electronic files, applications and/or other data that is not owned by and/or otherwise exclusively claimed and/or controlled by an enterprise, business and/or other organization. Restoring a User Device 100 to its factory state may include erasing the contents of all memory locations associated with data that was not present when the User Device 100 left the manufacturer and/or factory. Furthermore, remedial actions may be taken with respect to remote services communicatively coupled to a User Device 100, such as by blocking data transmissions from a User Device 100 to a remote service, blocking data transmissions from a remote service to a User Device 100, and erasing the contents of memory locations of a remote service. Once a remedial action is performed, method 300 may end at stage 335.

In some instances, the method 300 may repeat stage 330 to determine whether the functions that previously did not comply with the compliance rules now comply with the compliance rules. If it is determined that the functions, once again, do not comply with the compliance rules, the method 300 may perform at least one escalated remedial action. For instance, if it is determined a second time that a user of User Device 100 is attempting to access a business email account while User Device 100 is located at a location that is not associated with the business, then an escalated remedial action may be taken. Certain remedial actions, such as erasing the contents of memory locations of a User Device 100 and restoring a User Device 100 to its factory state, may be more drastic than the other remedial actions disclosed and thereby classified as escalated remedial actions in such embodiment. Accordingly, if a function does not comply with the compliance rules for a second or subsequent time, an escalated remedial action may be performed. Once an escalated remedial action is performed, method 300 may end at stage 335.

If the function complies with the compliance rules at stage 320, method 300 may advance to stage 330 and approve the requests to perform functions on a User Device 100 and/or the functions being performed on a User Device 100. For instance, the requests to perform functions and/or the functions being performed may be approved by no action being taken by the method 300. Upon completion of stage 330, method 300 may end at stage 335.

The embodiments and functionalities described herein may operate via a multitude of computing systems, including wired and wireless computing systems, mobile computing systems (e.g., mobile telephones, tablet or slate type computers, laptop computers, etc.). In addition, the embodiments and functionalities described herein may operate over distributed systems, where application functionality, memory, data storage and retrieval and various processing functions may be operated remotely from each other over a distributed computing network, such as the Internet or an intranet. User interfaces and information of various types may be displayed via on-board computing device displays or via remote display units associated with one or more computing devices. For example, user interfaces and information of various types may be displayed and interacted with on a wall surface onto which user interfaces and information of various types are projected. Interaction with the multitude of computing systems with which embodiments of this disclosure may be practiced include, keystroke entry, touch screen entry, voice or other audio entry, gesture entry where an associated computing device is equipped with detection (e.g., camera) functionality for capturing and interpreting user gestures for controlling the functionality of the computing device, and the like. The Figures above and their associated descriptions provide a discussion of a variety of operating environments in which embodiments of this disclosure may be practiced. However, the devices and systems illustrated and discussed with respect to the Figures are for purposes of example and illustration and are not limiting of a vast number of computing device configurations that may be utilized for practicing embodiments of this disclosure as described herein.

The term computer readable media as used herein may include computer storage media. Computer storage media may include volatile and nonvolatile, removable and non-removable media implemented in any method or technology for storage of information, such as computer readable instructions, data structures, program modules, or other data. System memory, removable storage, and non-removable storage are all computer storage media examples (i.e., memory storage.) Computer storage media may include, but is not limited to, RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other medium which can be used to store.

The term computer readable media as used herein may also include communication media. Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media.

A number of applications and data files may be used to perform processes and/or methods as described above. The aforementioned processes are examples, and a processing unit may perform other processes. Other programming modules that may be used in accordance with embodiments of this disclosure may include electronic mail, calendar, and contacts applications, data processing applications, word processing applications, spreadsheet applications, database applications, slide presentation applications, drawing or computer-aided application programs, etc.

Generally, consistent with embodiments of this disclosure, program modules may include routines, programs, components, data structures, and other types of structures that may perform particular tasks or that may implement particular abstract data types. Moreover, embodiments of the disclosure may be practiced with other computer system configurations, including hand-held devices, multiprocessor systems, microprocessor-based or programmable consumer electronics, minicomputers, mainframe computers, and the like. Embodiments of this disclosure may also be practiced in distributed computing environments where tasks are performed by remote processing devices that are linked through a communications network. In a distributed computing environment, program modules may be located in both local and remote memory storage devices.

Furthermore, embodiments of this disclosure may be practiced in an electrical circuit comprising discrete electronic elements, packaged or integrated electronic chips containing logic gates, a circuit utilizing a microprocessor, or on a single chip containing electronic elements or microprocessors. Embodiments of this disclosure may also be practiced using other technologies capable of performing logical operations such as, for example, AND, OR, and NOT, including but not limited to mechanical, optical, fluidic, and quantum technologies. In addition, embodiments of the disclosure may be practiced within a general-purpose computer or in any other circuits or systems.

Embodiments of this disclosure may, for example, be implemented as a computer process and/or method, a computing system, an apparatus, device, or appliance, and/or as an article of manufacture, such as a computer program product or computer readable media. The computer program product may be a computer storage media readable by a computer system and encoding a computer program of instructions for executing a computer process. The computer program product may also be a propagated signal on a carrier readable by a computing system and encoding a computer program of instructions for executing a computer process. Accordingly, the present disclosure may be embodied in hardware and/or in software (including firmware, resident software, micro-code, etc.). In other words, embodiments of the present disclosure may take the form of a computer program product on a computer-usable or computer-readable storage medium having computer-usable or computer-readable program code embodied in the medium for use by or in connection with an instruction execution system. A computer-usable or computer-readable medium may be any medium that can contain, store, communicate, propagate, or transport the program for use by or in connection with the instruction execution system, apparatus, or device.

The computer-usable or computer-readable medium may be, for example but not limited to, an electronic, magnetic, optical, electromagnetic, infrared, or semiconductor system, apparatus, device, or propagation medium. More specific computer-readable medium examples (a non-exhaustive list), the computer-readable medium may include the following: an electrical connection having one or more wires, a portable computer diskette, a random access memory (RAM), a read-only memory (ROM), an erasable programmable read-only memory (EPROM or Flash memory), an optical fiber, and a portable compact disc read-only memory (CD-ROM). Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory.

Embodiments of this disclosure may be practiced via a system-on-a-chip (SOC) where each and/or many of the elements described above may be integrated onto a single integrated circuit. Such an SOC device may include one or more processing units, graphics units, communications units, system virtualization units and various application functionalities, all of which may be integrated (or "burned") onto the chip substrate as a single integrated circuit. When operating via an SOC, the functionality, described herein, with respect to training and/or interacting with any element may operate via application-specific logic integrated with other components of the computing device/system on the single integrated circuit (chip).

Embodiments of this disclosure are described above with reference to block diagrams and/or operational illustrations of methods, systems, and computer program products according to embodiments of the disclosure. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

While certain embodiments have been described, other embodiments may exist. Furthermore, although embodiments of the present disclosure have been described as being associated with data stored in memory and other storage mediums, data can also be stored on or read from other types of computer-readable media, such as secondary storage devices, like hard disks, floppy disks, or a CD-ROM, a carrier wave from the Internet, or other forms of RAM or ROM. Further, the disclosed methods' stages may be modified in any manner, including by reordering stages and/or inserting or deleting stages, without departing from the disclosure.

Embodiments of the present disclosure, for example, are described above with reference to block diagrams and/or operational illustrations of methods, systems, and computer program products according to embodiments of the disclosure. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

While certain embodiments of the disclosure have been described, other embodiments may exist. Furthermore, although embodiments of the present disclosure have been described as being associated with data stored in memory and other storage mediums, data can also be stored on or read from other types of computer-readable media, such as secondary storage devices, like hard disks, floppy disks, or a CD-ROM, a carrier wave from the Internet, or other forms of RAM or ROM. Further, the disclosed methods' stages may be modified in any manner, including by reordering stages and/or inserting or deleting stages, without departing from the disclosure.

All rights including copyrights in the code included herein are vested in and the property of the Assignee. The Assignee retains and reserves all rights in the code included herein, and grants permission to reproduce the material only in connection with reproduction of the granted patent and for no other purpose.

While the specification includes examples, the disclosure's scope is indicated by the following claims. Furthermore, while the specification has been described in language specific to structural features and/or methodological acts, the claims are not limited to the features or acts described above. Rather, the specific features and acts described above are disclosed as example for embodiments of the disclosure.

Technical effects of the present disclosure may include leveraging client devices to aide in legal compliance, as certain legal compliance requirements may prohibit employees from performing employment-related tasks when the client devices are located outside of certain authorized employment locations. Technical effects of the present disclosure may further include benefits to the performance of client devices for personal tasks when the client devices are located outside of certain authorized employment locations, as removing access to functionality and/or resources associated with employment may permit an increase in the allocation of memory and/or processor power allotted to such personal tasks.

## Claims

1. A method for providing location-based functionality restrictions, the method being implemented on a user device (100) comprising at least one processor (105) coupled to at least one memory storage (110), the method comprising:
storing, in a rules store on the user device (100), a plurality of compliance rules;
receiving from a compliance server (220) periodic updates to the rules store;
identifying, using an agent application executing on the user device (100), at least one request by the user device (100) to perform at least one function provided by an application programming interface (API) associated with an operating system on the user device (100) (310);
in response to the identifying, determining, using the agent application, whether the performance of the at least one function does not comply with at least one compliance rule in the rules store, wherein the at least one compliance rule comprises at least one location where the at least one user device (100) is authorized to perform the at least one function (320); and,
performing, using the agent application, at least one remedial action in response to at least one determination that the at least one function does not comply with the at least one compliance rule (325).

2. The method of claim 1, wherein the at least one location comprises a business location or a non-business location.

3. The method of any of claims 1 to 2, wherein the determination that the performance of the at least one function does not comply with at least one compliance rule in the rules store comprises a determination that the performance of the at least one function does not comply with a threshold number of the plurality of compliance rules.

4. The method of any of claims 1 to 2, wherein the determination that the performance of the at least one function does not comply with at least one compliance rule in the rules store comprises a determination that the performance of the at least one function does not comply with each of the plurality of compliance rules.

5. The method of any of claims 1 to 4, wherein the at least one remedial action comprises at least one remedial action taken with respect to the at least one user device (100).

6. The method of any of claims 1 to 5, wherein the at least one remedial action comprises or further comprises disabling at least one hardware feature of the at least one user device (100).

7. The method of any of claims 1 to 6, wherein the at least one remedial action comprises or further comprises disabling at least one software feature of the at least one user device (100).

8. The method of any of claims 1 to 7, wherein the at least one remedial action comprises or further comprises queuing the at least one request to perform the at least one function on the at least one user device (100) until the at least one function complies with the at least one compliance rule.

9. The method of any of claims 1 to 8, wherein the at least one remedial action comprises or further comprises at least one remedial action taken with respect to at least one remote service communicatively coupled to the at least one user device (100).

10. The method of any of claims 1 to 9, wherein the at least one remedial action comprises or further comprises blocking at least one data transmission from the at least one user device (100) to at least one remote service communicatively coupled to the at least one user device (100).

11. The method of any of claims 1 to 10, wherein the at least one remedial action comprises or further comprises blocking at least one data transmission from at least one remote service communicatively coupled to the at least one user device (100) to the at least one user device (100).

12. The method of any of claims 1 to 11, wherein the at least one remedial action comprises or further comprises erasing at least one location of at least one memory of at least one remote service communicatively coupled to the at least one user device (100).

13. The method of any of claims 1 to 11, further comprising
determining whether the requests that previously did not comply with at least one of the at least one compliance rules now comply with the at least one compliance rule and
performing an escalated remedial action in response to a determination that the request once again does not comply with the at least one compliance rule.

14. A user device (100) comprising:
at least one memory storage (110) comprising a rules store storing a plurality of compliance rules; and
at least one processor (105) coupled to the at least one memory storage (110), wherein the at least one processor (105) is configured to:
receive, from a compliance server, periodic updates to the rules store;
identify, using an agent application executing on the user device, a request to perform at least one function provided by an application programming interface (API) associated with an operating system on the user device (100);
in response to the identifying, determine, using the agent application, whether the performance of the at least one function does not comply with at least one compliance rule stored in the rules store, wherein the at least one compliance rule comprises at least one location where the at least one user device (100) is authorized to perform the at least one function; and
perform, using the agent application, at least one remedial action in response to at least one determination that the at least one function does not comply with the at least one compliance rule, wherein the remedial action comprises queuing the request to perform the function on the user device until the performance of the function complies with the at least one compliance rule.

15. A non-transitory computer-readable medium that stores a set of instructions that, when executed by a user device (100) comprising at least one processor (105) coupled to at least one memory storage (110), performs the method of any of claims 1 to 13.

## Patentansprüche

1. Verfahren zum Bereitstellen von standortbasierten Funktionalitätsbeschränkungen, wobei das Verfahren auf einem Benutzergerät (100) umgesetzt wird, das zumindest einen mit zumindest einer Speichervorrichtung (110) gekoppelten Prozessor (105) umfasst, wobei das Verfahren Folgendes umfasst:
Speichern, in einer Regelsammlung auf dem Benutzergerät (100), von mehreren Konformitätsregeln;
Empfangen, von einem Konformitätsserver (220), von periodischen Aktualisierungen der Regelsammlung;
Identifizieren, unter Verwendung einer Agentenanwendung, die auf dem Benutzergerät (100) ausgeführt wird, von zumindest einer Anforderung durch das Benutzergerät (100), zumindest eine durch eine Anwendungsprogrammierschnittstelle (API; application programming interface) in Verbindung mit einem Betriebssystem auf dem Benutzergerät (100) bereitgestellte Funktion durchzuführen (310);
in Reaktion auf das Identifizieren, Bestimmen, unter Verwendung der Agentenanwendung, ob die Durchführung der zumindest einen Funktion nicht konform mit zumindest einer Konformitätsregel in der Regelsammlung ist, wobei die zumindest eine Konformitätsregel zumindest einen Standort umfasst, wo das zumindest eine Benutzergerät (100) autorisiert ist, die zumindest eine Funktion durchzuführen (320); und
Durchführen, unter Verwendung der Agentenanwendung, von zumindest einer Abhilfeaktion in Reaktion auf zumindest eine Bestimmung, dass die zumindest eine Funktion nicht konform mit der zumindest einen Konformitätsregel ist (325) .

2. Verfahren nach Anspruch 1, wobei der zumindest eine Standort einen geschäftlichen Standort oder einen nicht-geschäftlichen Standort umfassen kann.

3. Verfahren nach einem der Ansprüche 1 bis 2, wobei die Bestimmung, dass die Durchführung der zumindest einen Funktion mit zumindest einer Konformitätsregel in der Regelsammlung nicht konform ist, eine Bestimmung umfasst, dass die Durchführung der zumindest einen Funktion nicht konform mit einer Schwellenanzahl der mehreren Konformitätsregeln ist.

4. Verfahren nach einem der Ansprüche 1 bis 2, wobei die Bestimmung, dass die Durchführung der zumindest einen Funktion mit zumindest einer Konformitätsregel in der Regelsammlung nicht konform ist, eine Bestimmung umfasst, dass die Durchführung der zumindest einen Funktion nicht konform mit jeder der mehreren Konformitätsregeln ist.

5. Verfahren nach einem der Ansprüche 1 bis 4, wobei die zumindest eine Abhilfeaktion zumindest eine Abhilfeaktion umfasst, die bezüglich des zumindest einen Benutzergeräts (100) eingeleitet wurde.

6. Verfahren nach einem der Ansprüche 1 bis 5, wobei die zumindest eine Abhilfeaktion Deaktivieren von zumindest einem Hardwaremerkmal des zumindest einen Benutzergeräts (100) umfasst oder ferner umfasst.

7. Verfahren nach einem der Ansprüche 1 bis 6, wobei die zumindest eine Abhilfeaktion Deaktivieren von zumindest einem Softwaremerkmal des zumindest einen Benutzergeräts (100) umfasst oder ferner umfasst.

8. Verfahren nach einem der Ansprüche 1 bis 7, wobei die zumindest eine Abhilfeaktion Einreihen der zumindest einen Anforderung zum Durchführen der zumindest einen Funktion auf dem zumindest einen Benutzergerät (100), bis die zumindest eine Funktion konform mit der zumindest einen Konformitätsregel ist, umfasst oder ferner umfasst.

9. Verfahren nach einem der Ansprüche 1 bis 8, wobei die zumindest eine Abhilfeaktion zumindest eine Abhilfeaktion umfasst oder ferner umfasst, die bezüglich zumindest eines abgesetzten Dienstes, der kommunikativ mit dem zumindest einen Benutzergerät (100) gekoppelt ist, eingeleitet wurde.

10. Verfahren nach einem der Ansprüche 1 bis 9, wobei die zumindest eine Abhilfeaktion Blockieren von zumindest einer Datenübertragung von dem zumindest einen Benutzergerät (100) zu zumindest einem abgesetzten Dienst, der kommunikativ mit dem zumindest einen Benutzergerät (100) gekoppelt ist, umfasst oder ferner umfasst.

11. Verfahren nach einem der Ansprüche 1 bis 10, wobei die zumindest eine Abhilfeaktion Blockieren von zumindest einer Datenübertragung von zumindest einem abgesetzten Dienst, der kommunikativ mit dem zumindest einen Benutzergerät (100) gekoppelt ist, zu dem zumindest einen Benutzergerät (100) umfasst oder ferner umfasst.

12. Verfahren nach einem der Ansprüche 1 bis 11, wobei die zumindest eine Abhilfeaktion Löschen von zumindest einem Standort von zumindest einem Speicher von zumindest einem abgesetzten Dienst, der kommunikativ mit dem zumindest einen Benutzergerät (100) gekoppelt ist, umfasst oder ferner umfasst.

13. Verfahren nach einem der Ansprüche 1 bis 11, das ferner Folgendes umfasst:
Bestimmen, ob die Anforderungen, die vorher nicht konform mit zumindest einer der einen oder mehreren Konformitätsregeln waren, jetzt mit der zumindest einen Konformitätsregel konform sind; und
Durchführen einer eskalierten Abhilfeaktion in Reaktion auf eine Bestimmung, dass die Anforderung erneut nicht konform mit der zumindest einen Konformitätsregel ist.

14. Benutzervorrichtung (100), die Folgendes umfasst:
zumindest eine Speichervorrichtung (110), umfassend eine Regelsammlung, in der mehrere Konformitätsregeln gespeichert sind; und
zumindest einen Prozessor (105), der mit der zumindest einen Speichervorrichtung (110) gekoppelt ist, wobei der zumindest eine Prozessor (105) ausgelegt ist zum:
Empfangen, von einem Konformitätsserver, von periodischen Aktualisierungen der Regelsammlung;
Identifizieren, unter Verwendung einer Agentenanwendung, die auf dem Benutzergerät ausgeführt wird, einer Anforderung, zumindest eine durch eine Anwendungsprogrammierschnittstelle (API; application programming interface) in Verbindung mit einem Betriebssystem auf dem Benutzergerät (100) bereitgestellte Funktion durchzuführen;
in Reaktion auf das Identifizieren, Bestimmen, unter Verwendung der Agentenanwendung, ob die Durchführung der zumindest einen Funktion nicht konform mit zumindest einer in der Regelsammlung gespeicherten Konformitätsregel ist, wobei die zumindest eine Konformitätsregel zumindest einen Standort umfasst, wo das zumindest eine Benutzergerät (100) autorisiert ist, die zumindest eine Funktion durchzuführen; und
Durchführen, unter Verwendung der Agentenanwendung, von zumindest einer Abhilfeaktion in Reaktion auf zumindest eine Bestimmung, dass die zumindest eine Funktion nicht konform mit der zumindest einen Konformitätsregel ist, wobei die Abhilfeaktion Einreihen der Anforderung zum Durchführen der Funktion auf dem Benutzergerät, bis die Durchführung der Funktion mit der zumindest einen Konformitätsregel konform ist, umfasst.

15. Nicht-flüchtiges computerlesbares Medium, das eine Menge von Befehlen speichert, die, wenn durch ein Benutzergerät (100) ausgeführt, umfassen, dass zumindest ein Prozessor (105), der mit zumindest einer Speichervorrichtung (110) gekoppelt ist, das Verfahren nach einem der Ansprüche 1 bis 13 durchführt.

## Revendications

1. Procédé pour fournir des restrictions de fonctionnalité basées sur l'emplacement, le procédé étant mis en oeuvre sur un dispositif utilisateur (100) comprenant au moins un processeur (105) couplé à au moins une mémoire de stockage (110), le procédé comprenant :
le stockage, dans une mémoire de règles sur le dispositif d'utilisateur (100), d'une pluralité de règles de conformité ;
la réception en provenance d'un serveur de conformité (220) de mises à jour périodiques de la mémoire de règles ;
l'identification, à l'aide d'une application d'agent s'exécutant sur le dispositif d'utilisateur (100), d'au moins une demande du dispositif d'utilisateur (100) d'exécution d'au moins une fonction fournie par une interface de programmation d'application (API) associée à un système d'exploitation sur le dispositif d'utilisateur (100) (310) ;
en réponse à l'identification, la détermination, à l'aide de l'application d'agent, du fait que l'exécution de la ou des fonctions est ou n'est pas conforme à au moins une règle de conformité de la mémoire de règles, dans lequel la ou les règles de conformité comprennent au moins un emplacement où le ou les dispositifs d'utilisateur (100) sont autorisés à exécuter la ou les fonctions (320) ; et,
l'exécution, à l'aide de l'application d'agent, d'au moins une action corrective en réponse à au moins une détermination du fait que la ou les fonctions ne sont pas conformes à la règle ou aux règles de conformité (325).

2. Procédé selon la revendication 1, dans lequel le ou les emplacements comprennent un emplacement professionnel ou un emplacement non professionnel.

3. Procédé selon l'une quelconque des revendications 1 et 2, dans lequel la détermination du fait que l'exécution de la fonction ou des fonctions n'est pas conforme à au moins une règle de conformité de la mémoire de règles comprend une détermination du fait que l'exécution de la ou des fonctions n'est pas conforme à un nombre seuil de la pluralité de règles de conformité.

4. Procédé selon l'une quelconque des revendications 1 et 2, dans lequel la détermination du fait que l'exécution de la fonction ou des fonctions n'est pas conforme à au moins une règle de conformité de la mémoire de règles comprend une détermination du fait que l'exécution de la ou des fonctions n'est pas conforme à chaque règle de la pluralité de règles de conformité.

5. Procédé selon l'une quelconque des revendications 1 à 4, dans lequel la ou les actions correctives comprennent au moins une action corrective prise qui concerne le ou les dispositifs d'utilisateur (100) .

6. Procédé selon l'une quelconque des revendications 1 à 5, dans lequel la ou les actions correctives comprennent ou comprennent en outre la désactivation d'au moins une caractéristique du matériel du ou des dispositifs d'utilisateur (100).

7. Procédé selon l'une quelconque des revendications 1 à 6, dans lequel la ou les actions correctives comprennent ou comprennent en outre la désactivation d'au moins une caractéristique du logiciel du ou des dispositifs d'utilisateur (100).

8. Procédé selon l'une quelconque des revendications 1 à 7, dans lequel la ou les actions correctives comprennent ou comprennent en outre la mise en file d'attente de la ou des demandes d'exécution de la ou des fonctions sur le ou les dispositifs d'utilisateur (100) jusqu'à ce que la ou les fonctions soient conformes à la règle ou aux règles de conformité.

9. Procédé selon l'une quelconque des revendications 1 à 8, dans lequel la ou les actions correctives comprennent ou comprennent en outre au moins une action corrective prise qui concerne au moins un service distant couplé en communication au dispositif ou aux dispositifs d'utilisateur (100).

10. Procédé selon l'une quelconque des revendications 1 à 9, dans lequel la ou les actions correctives comprennent ou comprennent en outre le blocage d'au moins une transmission de données du ou des dispositifs d'utilisateur (100) vers au moins un service distant couplé en communication au dispositif ou aux dispositifs d'utilisateur (100).

11. Procédé selon l'une quelconque des revendications 1 à 10, dans lequel la ou les actions correctives comprennent ou comprennent en outre le blocage d'au moins une transmission de données d'au moins un service distant couplé en communication au dispositif ou aux dispositifs d'utilisateur (100) vers le dispositif ou les dispositifs d'utilisateur (100).

12. Procédé selon l'une quelconque des revendications 1 à 11, dans lequel la ou les actions correctives comprennent ou comprennent en outre la suppression d'au moins un emplacement d'au moins une mémoire d'au moins un service distant couplé en communication au dispositif ou aux dispositifs d'utilisateur (100).

13. Procédé selon l'une quelconque des revendications 1 à 11, comprenant en outre
la détermination du fait que les demandes qui auparavant ne respectaient pas au moins une de la ou des règles de conformité respectent ou non désormais la règle ou les règles de conformité et
l'exécution d'une action corrective au niveau supérieur en réponse à une détermination selon laquelle la demande n'est de nouveau pas conforme à la règle ou aux règles de conformité.

14. Dispositif d'utilisateur (100), comprenant :
au moins une mémoire de stockage (110) comprenant une mémoire de règles stockant une pluralité de règles de conformité ; et
au moins un processeur (105) couplé à la mémoire ou aux mémoires de stockage (110), dans lequel le ou les processeurs (105) sont configurés pour :
recevoir, d'un serveur de conformité, des mises à jour périodiques de la mémoire de règles ;
identifier, à l'aide d'une application d'agent s'exécutant sur le dispositif d'utilisateur, une demande d'exécution d'au moins une fonction fournie par une interface de programmation d'application (API) associée à un système d'exploitation sur le dispositif d'utilisateur (100) ;
en réponse à l'identification, déterminer, à l'aide de l'application d'agent, si l'exécution de la ou des fonctions n'est pas conforme à au moins une règle de conformité stockée dans la mémoire de règles, dans lequel la ou les règles de conformité comprennent au moins un emplacement où le ou les dispositifs d'utilisateur (100) sont autorisés à exécuter la ou les fonctions ; et,
exécuter, à l'aide de l'application d'agent, au moins une action corrective en réponse à au moins une détermination du fait que la ou les fonctions ne sont pas conformes à la règle ou aux règles de conformité, dans lequel l'action corrective comprend la mise en file d'attente de la demande d'exécution de la fonction sur le dispositif d'utilisateur jusqu'à ce que l'exécution de la fonction soit conforme à la règle ou aux règles de conformité.

15. Support non transitoire lisible par ordinateur qui stocke un ensemble d'instructions qui, lorsqu'il est exécuté par un dispositif d'utilisateur (100) comprenant au moins un processeur (105) couplé à au moins une mémoire de stockage (110), met en oeuvre le procédé selon l'une quelconque des revendications 1 à 13.
